# EUROPEAN PATENT SPECIFICATION

(11) **EP 2 685 046 B1**
(45) Date of publication and mention of the grant of the patent: **21.12.2016**
(21) Application number: 11860600.3
(22) Date of filing: 28.09.2011
(51) Int. Cl.: E21B 43/38, B01D 45/02, B01D 17/02

(54) **CROWN-SHAPED SEPARATION DEVICE FOR SEPARATING OIL AND WATER IN WELL**
KRONENFÖRMIGE TRENNVORRICHTUNG ZUM TRENNEN VON ÖL UND WASSER IN BOHRLÖCHERN
DISPOSITIF DE SÉPARATION EN FORME DE COURONNE POUR SÉPARER LE PÉTROLE ET L'EAU DANS UN PUITS

(30) Priority: 09.03.2011 CN 201120060174 U; 09.03.2011 CN 201120060175 U
(43) Date of publication of application: 15.01.2014
(73) Proprietor: Petrochina Company Limited, Beijing 100007 (CN); Daqing Oilfield Co. Lit, Daquing, Heilongjiang 163453 (CN)
(72) Inventor: WANG, Yan, Daqing City Heilongjiang 163001 (CN); WANG, Demin, Daqing City Heilongjiang 163001 (CN); ZHU, Rongjie, Daqing City Heilongjiang 163001 (CN); REN, Long, Daqing City Heilongjiang 163001 (CN); ZHONG, Rong, Daqing City Heilongjiang 163001 (CN); WANG, Hongyan, Daqing City Heilongjiang 163001 (CN)
(74) Representative: Karlström, Lennart
(86) International application number: PCT/CN2011/001640
(87) International publication number: WO 2012/119283

(56) References cited:
- CN-A- 1 626 770
- CN-A- 101 025 080
- CN-A- 101 377 126
- CN-A- 101 377 126
- CN-A- 101 773 742
- CN-A- 101 773 742
- CN-U- 201 599 019
- CN-U- 201 599 019
- CN-U- 201 943 683
- CN-U- 201 943 684
- RU-C2- 2 269 649
- RU-C2- 2 269 649
- US-A- 4 241 788
- US-A- 4 241 788

## Description

### TECHNICAL FIELD

The invention relates to a downhole separating device for separating oil and water, particularly a downhole Crown-shaped separating device for separating oil and water.

### BACKGROUND OF THE INVENTION

The conventional oil well lifting equipment of the oil field draws three-phase mixture of gas, oil and water during the downhole operation, and a small amount of which carry part of oil layer sand along with swabbing fluid. With lengthening of the development time of multiply formation field, water and sand contained in the swabbing fluid increase. If water content is too high during the production of oil well, the production cost will increase; if oil layer sand enters into the oil pump along with the fluid, the probability of stuck pump is greatly increased, which may result in unnecessary downhole servicing operation. Therefore, the prior separator used in the oil field can not effectively separate oil and water underground.

In Chinese Patent Application Publication CN101773742A, it discloses a multilayer uni-form-flow-type coalescence oil-water separator and a separation method. The multilayer uniform-flow-type coalescence oil-water separator comprises a center pipe, wherein a group of sedimentation cups are mounted on the outer wall of the center pipe from top to bottom, clearances are formed among the sedimentation cups, the cup body bottom of each sedimentation cup is in a tile edge shape, a circular space is arranged between the cup body of each sedimentation cup and the center pipe, the center pipe corresponding to the circular space is provided with a group of liquid inlet holes, and a circular filter container is arranged in a cup cavity of each sedimentation cup below the liquid inlet holes and sleeved on the center pipe. The separator effectively improves the oil-water separation efficiency in multiple so as to reduce the number and the size of wastewater treatment devices and prolong the service life of an oil well with high water content. Meanwhile, the water content of produced liquid is reduced, the production cost is saved, and the benefits are improved. However, due to the filter material within the filter container, the filter material reduces the volume within the cap, and thus the effective separation operation is reduced. Therefore, the separation efficiency is not very good.

In Chinese Patent Application Publication CN101377126A, it discloses a corrugated sedimentation cup and a uniform flow type multi-cup gas anchor, which belong to a gas-liquid separator for oil fields. The outer profile of the body of the corrugated sedimentation cup corrugately rises along an axial direction, which is favorable for the rapid gathering and rising of gas. The uniform flow type multi-cup gas anchor is composed of multiple corrugated sedimentation cups, a central tube, multiple sedimentation cup protectors and a well-washing valve; wherein, the sedimentation cup protectors are intervallically nested on the central tube; on the central tube, multiple corrugated sedimentation cups are intervallically nested between each two sedimentation cup protectors; on the central tube, multiple liquid inflow holes are evenly arranged at each position which is close to the internal bottom of each corrugated sedimentation cup; and the lower part of the central tube is connected with the well-washing valve. The gas anchor utilizes the corrugated sedimentation cups to divide gas-liquid mixture into a plurality of portions, and utilizes the prismatically rising profile of the corrugated sedimentation cup to rapidly gather and rise the separated gas, thus realizing the purposes of effectively separating gas, increasing pump efficiency and crude oil yield and saving energy. However, the separation efficiency of the corrugated sedimentation cup or the uniform flow type multi-cup gas anchor is also not satisfied.

In Chinese Utility Model Publication CN201599019U, it discloses a down-well sedimentation cup as a gas-liquid separation device. The cup has an upper opening of regular teeth shape, a ribbed bottom in the shape of hopper, and a coupling pipe at the center of the cup body. However, the separation efficiency of this sedimentation cup is also not satisfied.

In Russia Patent Publication RU2269649C2, it discloses a bottom hole separator, comprises suction connection pipe with axial and radial channels, cups serially arranged one above another inside the suction connection pipe and accumulating pipe. The radial channels are in level with each cup bottom. Cup height is determined from analytic expression. Summary cup volume is selected such that summary volume of formation fluid filled in the cups exceeds fluid volume supplied by sucker-rod pump per one pump operation. However, the separation efficiency of this bottom hole separator is also not satisfied.

In US Patent Application Publication US4241788A, it discloses a gas separator for a well pump for pumping well fluid. The gas separator includes a plurality of upwardly opening retention cups which are disposed in vertical spaced relationship one above the other above a reservoir chamber. Each retention cup has a retention chamber which provides a fluid retaining capacity sufficient to momentarily retain well fluid flowing from the well so as to permit gas to escape from the fluid so retained and returned to the well. The difference in specific gravity between gassy well fluid and well fluid with gas removed creases circulation of well fluid through the retention cups and into the reservoir chamber, with each retention cup catching down falling well fluid that has been partially freed of entrained gas. Second stage separation of gas from well fluid is achieved by providing at least one opening or passageway from the reservoir chamber adapted to provide a gas exit between the well and the reservoir chamber. However, the separation efficiency of this gas separator is also not satisfied.

### SUMMARY OF THE INVENTION

The object of invention is to solve the problem that the prior separator used in the oil field can not effectively separate oil and water when the downhole fluid is drawn by the pumping unit, and to provide a downhole crown-shaped separating device for separating oil and water.

The technical solution of the present invention is as follows: there is provided a downhole crown-shaped separating device for separating oil and water in accordance with the present invention, the separating device comprising a oil pump joint, a coupling collar, a tube joint, a central tube and a well-washing valve which are fixedly connected with one another from top to bottom in sequence. The crown-shaped separating device further comprises N sections of separators sleeved on the central tube, and N+1 separator joints sleeved on the central tube sequentially from top to bottom, N being the natural number, one section of the separator being provided between two adjacent separator joints. Each section of separator includes an upper locating sleeve, a lower locating sleeve, a plurality of sedimentation cups sleeved on the central tube sequentially from top to bottom, in which the two neighboring sedimentation cups are nested into each other and form a gap between them, the uppermost sedimentation cup on each section of separator being fixedly connected to the central tube by the upper locating sleeve, and the lowermost sedimentation cup on each section of separator being fixedly connected to the central tube by the lower locating sleeve, and a plurality of ribbed separating bowls, each sedimentation cup being provided with the ribbed separating bowl embedded therein. The sedimentation cup is crown-shaped and has a multi-ribbed polygon bottom, the rib of which forms an pitch angle of 30 to 60 degrees with the horizontal line, and the middle part of the sedimentation cup is a hollow cylinder, the upper edge of the sedimentation cup being zigzag-shaped which corresponds to the shape of the bottom, the sedimentation cup having a cup holder for holding said sedimentation cup which forms an annular space with the central tube. A group of intake holes are provided on the central tube corresponding to the annular space, a bar-shaped gap is opened on the cup holder of the sedimentation cup, the ribbed separating bowl has same shape as that of the bottom of the sedimentation cup, the ribbed separating bowl is provided with several liquid passages, and the outer diameter of the sedimentation cup is smaller than that of the separator joint. N stands for the natural number.

This invention has following advantages compared with the prior art: the separator 6 divides the extracted fluid into several parts, and aggregate and lift the oil rapidly by means of the pitch angle formed between the rib of the bottom 10-1 of the sedimentation cup 10 and the horizontal line; the shape of the ribbed separating bowl 11 in the separator 6 is consistent with the shape of the bottom 10-1 of the sedimentation cup, and the ribbed separating bowl 11 is provided with several liquid passages 11-1, so that the fluid entered into the separator 6 aggregated and lifted again, which ensures the effective separation of oil and water in the separator. The device according to the present invention realizes the separation of oil and water in fluid when the viscosity of the underground fluid is greater than 2mPa.s, reduces the water cut of the fluid swabbed by the oil pump, and increases oil-production efficiency.

### BRIEF DESCRIPITION OF THE FIGURES

Figure **1** is the front view of the overall structure of the separating device in accordance with the present invention;
Figure **2** is a partial cross-sectional view of the overall structure of the separating device in accordance with the present invention;
Figure **3** is an enlarged view of A shown in the Figure 2;
Figure **4** is a diagram showing the positional relation of two neighboring sedimentation cups 10 and the ribbed separating bowl 11;
Figure **5** is a front view of the sedimentation cup 10 in accordance with the present invention;
Figure **6** is a top view of the sedimentation cup 10 in accordance with the present invention;
Figure **7** is a front view of the ribbed separating bowl 11 in accordance with the present invention;
Figure **8** is a top view of the ribbed separating bowl 11 in accordance with the present invention.

### DETAILED DESCRIPTION OF THE PREFERRED EMBODIMENTS

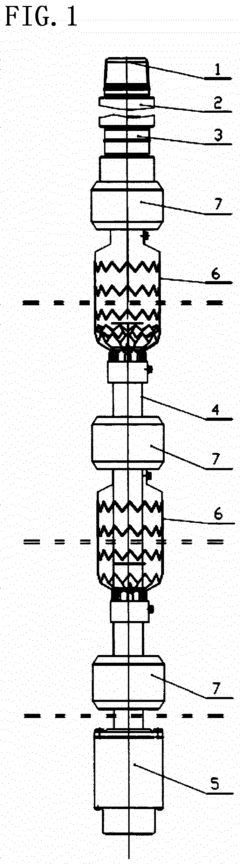

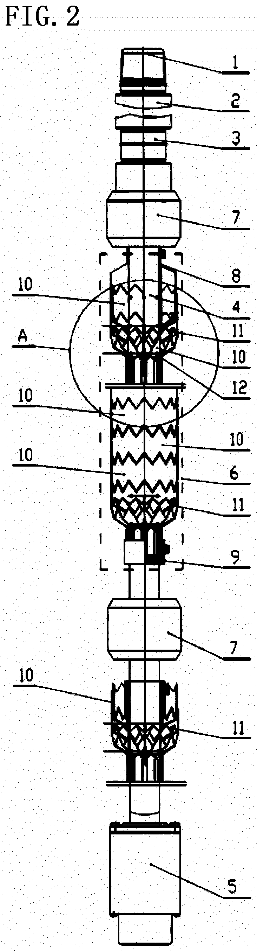

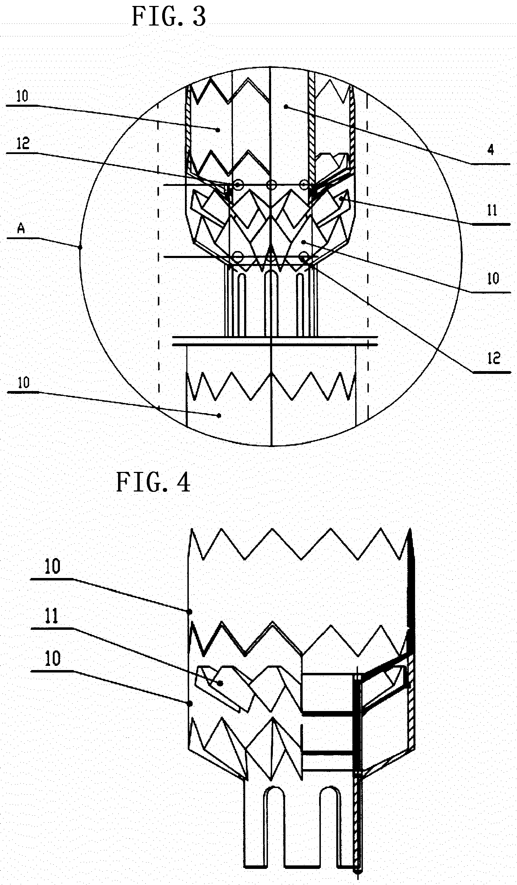

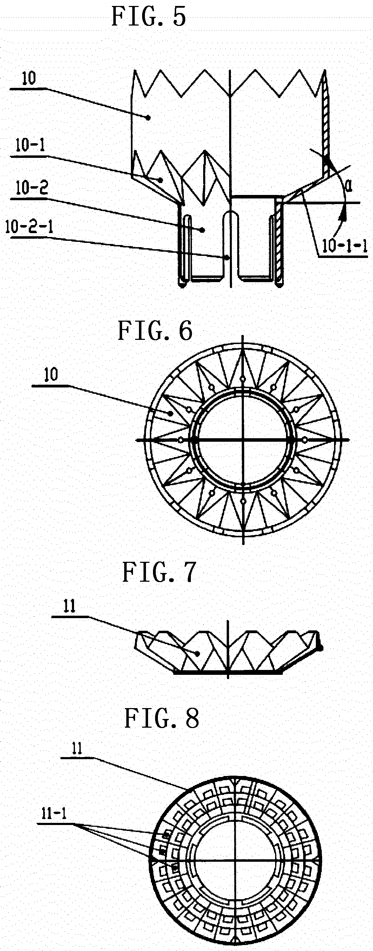

**Example 1:** the present embodiment is now described with reference to Figures 1-8. The downhole crown-shaped separating device for separating oil and water in accordance with the present embodiment comprises an oil pump joint 1, a coupling collar 2, a tube joint 3, a central tube 4 and a well-flushing valve5 which are fixedly connected with one another from top to bottom in sequence. The crown-shaped separating device further comprises N sections of separators 6 sleeved on the central tube, and N+1 separator joints 7 sleeved on the central tube sequentially from top to bottom, N being the natural number. One section of the separator 6 is provided between two adjacent separator joints 7. Each section of separator 6 includes an upper locating sleeve 8, a lower locating sleeve 9, a plurality of sedimentation cups 10 and a plurality of ribbed separating bowls 11. The plurality of sedimentation cups 10 are sleeved on the central tube 4 sequentially from top to bottom, in which the two neighboring sedimentation cups are nested into each other and form a gap between them. The uppermost sedimentation cup 10 on each section of separator is fixedly connected to the central tube 4 by the upper locating sleeve 8, and the lowermost sedimentation cup 10 on each section of separator 6 is fixedly connected to the central tube 4 by the lower locating sleeve 9, each sedimentation cup being provided with the ribbed separating bowl 11 embedded therein. The sedimentation cup is crown-shaped and has a multi-ribbed polygon bottom 10-1. The rib 10-1-1 of the bottom 10-1 forms a pitch angle α of 30 to 60 degrees with the horizontal line, and the middle part of the sedimentation cup 10 is a hollow cylinder, the upper edge of the sedimentation cup 10 being zigzag-shaped which corresponds to the shape of the bottom 10-1. The sedimentation cup 10 has a cup holder 10-2 for holding said sedimentation cup which forms an annular space with the central tube 4. A group of intake holes 12 are provided on the central tube 4 corresponding to the annular space. A bar-shaped gap 10-2-1 is opened on the cup holder 10-2 of the sedimentation cup 10. The ribbed separating bowl 11 has the same shape as that of the bottom 10-1 of the sedimentation cup 10, and the ribbed separating bowl 11 is provided with several liquid passages 11-1. The outer diameter of the sedimentation cup 10 is smaller than that of the separator joint 7. N stands for the natural number.
**Example 2:** the present embodiment is described with reference to figure 1. The number of the separator 6 of the embodiment is 60-80. The separating effect is good. Other constitution and connection relationship is the same as that of example 1.
**Example 3:** the present embodiment is described with reference to figure 3. The number of each group of intake holes 12 on the central tube 4 corresponding to the annular space of the embodiment is 3-12. The separating effect is good. Other constitution and connection relationship is the same as that of example 1 or example 2.
**Example 4:** the present embodiment is described with reference to figure 3. The aperture of the intake hole 12 on the central tube 4 corresponding to the annular space of the embodiment is 0.9mm-1.2mm. The separating effect is good. Other constitution and connection relationship is the same as that of example 1, example 2 or example 3.
**Example 5:** the present embodiment is described with reference to figure 2. The upper locating sleeve 8 and the central tube 4 are fixedly connected by bolts, and the lower locating sleeve 9 and the central tube 4 are fixedly connected by bolts. The structure is stable. Other constitution and connection relationship is the same as that of example 1, example 2, example 3 or example 4.

### Industrial applicability

The working process of the downhole crown-shaped separating device for separating underground oil and water according to the present invention: the oil pump joint 1 is connected with the oil pump; the mixture of oil and water passes through the lowest separator firstly; the separator 6 divides the extracted fluid into several parts, and aggregates and lift the oil rapidly by means of the pitch angle formed between the rib of the bottom 10-1 of the sedimentation cup 10 and the horizontal line. The shape of the ribbed separating bowl 11 in the separator 6 is consistent with the shape of the bottom 10-1 of the sedimentation cup 10, and the ribbed separating bowl 11 is provided with several liquid passages 11-1, so that the fluid entered into the separator 6 is aggregated and lifted again. The oil is further aggregated and lifted to a separator 6 by means of density difference of oil and water. Water then passes into the central tube 8 through the intake holes 12 and are extracted by the oil pump and pressurized and then injected into the objective interval.

## Claims

1. A downhole crown-shaped separating device for separating oil and water, comprising a oil pump joint (1), a coupling collar (2), a tube joint (3), a central tube (4) and a well-flushing valve (5) which are fixedly connected with one another from top to bottom in sequence;
**characterized in that** the crown-shaped separating device further comprises N sections of separators (6) sleeved on the central tube (4), and N+1 separator joints (7) sleeved on the central tube (4) sequentially from top to bottom, N being the natural number, one section of the separator (6) being provided between two adjacent separator joints (7),
wherein each section of separator (6) includes
an upper locating sleeve (8),
a lower locating sleeve (9),
a plurality of sedimentation cups (10) sleeved on the central tube (4) sequentially from top to bottom, in which the two neighboring sedimentation cups (10) are nested into each other and form a gap between them, the uppermost sedimentation cup (10) on each section of separator (6) being fixedly connected to the central tube (4) by the upper locating sleeve (8), and the lowermost sedimentation cup (10) on each section of separator (6) being fixedly connected to the central tube (4) by the lower locating sleeve (9), and
a plurality of ribbed separating bowls (11), each sedimentation cup (10) being provided with the ribbed separating bowl (11) embedded therein,
wherein the sedimentation cup (10) is crown-shaped and has a multi-ribbed polygon bottom (10-1), the rib (10-1-1) of which forms an pitch angle (α) of 30 to 60 degrees with the horizontal line, and the middle part of the sedimentation cup (10) is a hollow cylinder, the upper edge of the sedimentation cup (10) being zigzag-shaped which corresponds to the shape of the bottom (10-1), the sedimentation cup (10) having a cup holder (10-2) for holding said sedimentation cup which forms an annular space with the central tube (4), and
wherein a group of intake holes (12) are provided on the central tube (4) corresponding to the annular space, a bar-shaped gap (10-2-1) is opened on the cup holder (10-2) of the sedimentation cup (10), the ribbed separating bowl (11) has same shape as that of the bottom (10-1) of the sedimentation cup (10), the ribbed separating bowl (11) is provided with several liquid passages (11-1), and the outer diameter of the sedimentation cup (10) is smaller than that of the separator joint (7).

2. The downhole crown-shaped separating device according to claim **1, characterized in that** the number of the separator (6) is 60 to 80.

3. The downhole crown-shaped separating device according to claim **1** or **2, characterized in that** the number of each group of intake holes (12) on the central tube (4) corresponding to the annular space is 3 to 12.

4. The downhole crown-shaped separating device according to claim 3, **characterized in that** the aperture of the intake hole (12) on the central tube (4) corresponding to the annular space is 0.9mm to 1.2mm.

5. The downhole crown-shaped separating device according to claim 1, 2 or 4, **characterized in that** the upper locating sleeve (8) and the central tube (4) are fixedly connected together by bolts, and the lower locating sleeve (9) and the central tube (4) are fixedly connected by bolts.

## Patentansprüche

1. Kronenförmige Trennvorrichtung zum Trennen von Öl und Wasser in Bohrlöchern, mit einer Ölpumpenverbindung (1), einem Kupplungskragen (2), einer Rohrverbindung (3), einem Zentralrohr (4) und einem Bohrlochspülventil (5), welche der Reihe nach von oben nach unten miteinander fest verbunden sind, **dadurch gekennzeichnet, dass** die kronenförmige Trennvorrichtung N Separatorabschnitte (6) aufweist, welche auf dem Zentralrohr (4) aufgefädelt sind, und N+1 Separatorverbindungen (7) aufweist, welche auf dem Zentralrohr (4) nacheinander von oben nach unten aufgefädelt sind, wobei N die natürliche Zahl ist, ein Separatorabschnitt (6) zwischen zwei benachbarten Separator-verbindungen (7) vorgesehen ist,
wobei jeder Separatorabschnitt (6) aufweist:
eine obere Positionierhülse (8),
eine untere Positionierhülse (9),
eine Vielzahl von Sedimentierbechern (10), welche auf dem Zentralrohr (4) von oben nach unten nacheinander aufgefädelt sind, in welchen die beiden benachbarten Sedimentierbecher (10) ineinander geschachtelt sind und zwischen sich einen Spalt bilden, wobei der oberste Sedimentierbecher (10) auf jedem Separatorabschnitt (6) durch die obere Positionierhülse (8) fest mit dem Zentralrohr (4) befestigt ist, und der unterste Sedimentierbecher (10) auf jedem Separatorabschnitt (6) mit dem Zentralrohr (4) durch die untere Positionierhülse (9) fest verbunden ist, und
eine Vielzahl von gerippten Trennschüsseln (11), wobei jeder Sedimentierbecher (6) mit einer darin eingebetteten gerippten Separatorschüssel (11) versehen ist,
wobei der Sedimentierbecher (10) kronenförmig ist und einen vielrippigen Polygonboden (10-1) hat, dessen Rippe (10-1-1) einen Neigungswinkel (α) von 30 bis 60 Grad zur Horizontallinie bildet, und wobei der mittlere Teil des Sedimentierbechers (10) ein hohler Zylinder ist, wobei die obere Kante des Sedimentierbechers (10) zickzack-förmig ist, was mit der Form des Bodens (10-1) korrespondiert, wobei der Sedimentierbecher (10) einen Becherhalter (10-2) zum Halten des Sedimentierbechers hat, welcher mit dem Zentralrohr (4) einen ringförmigen Raum bildet, und
wobei eine Gruppe von Aufnahmelöchern (12) auf dem Zentralrohr (4) vorgesehen ist, welche mit dem ringförmigen Raum korrespondieren, wobei ein stabförmiger Spalt (10-2-1) an dem Becherhalter (10-2) des Sedimentierbechers (10) geöffnet ist, wobei die gerippte Trennschale (11) die gleiche Form hat wie die des Bodens (10-1) des Sedimentierbechers (10), wobei die gerippte Trennschale (11) mit mehreren Flüssigkeitskanälen (10-1) versehen ist, und der äußere Durchmesser des Sedimentierbechers (10) kleiner ist als der der Separatorverbindung (7).

2. Kronenförmige Trennvorrichtung für Bohrlöcher nach Anspruch 1, **dadurch gekennzeichnet, dass** die Anzahl der Separatoren (6) bei 60 bis 80 liegt.

3. Kronenförmige Trennvorrichtung für Bohrlöcher nach Anspruch 1 oder 2, **dadurch gekennzeichnet, dass** die Zahl jeder Gruppe von Aufnahmelöchern (12) auf dem Zentralrohr (4), welche mit dem ringförmigen Raum korrespondieren, bei 3 bis 12 liegt.

4. Kronenförmige Trennvorrichtung für Bohrlöcher nach Anspruch 3, **dadurch gekennzeichnet, dass** die Öffnung des Aufnahmelochs (12) an dem Zentralrohr (4), welche mit dem ringförmigen Raum korrespondiert, 0,9 mm bis 1,2 mm beträgt.

5. Kronenförmige Trennvorrichtung nach Anspruch 1, 2 oder 4, dadurch gekenn-zeichnet, dass die obere Positionierhülse (8) und das Zentralrohr (4) mittels Schrauben miteinander fest verbunden sind, und dass die untere Positionierhülse (9) und das Zentralrohr (4) mit Schrauben fest verbunden sind.

## Revendications

1. Dispositif de séparation en forme de couronne de fond de puits pour séparer le pétrole et l'eau, comprenant un joint de pompe à pétrole (1), un collier de couplage (2), un joint de tube (3), un tube central (4) et une vanne de vidange de puits (5) qui sont raccordés de manière fixe entre eux de haut en bas en séquence ;
**caractérisé en ce que** le dispositif de séparation en forme de couronne comprend en outre N sections de séparateurs (6) emmanchés sur le tube central (4), et N+1 joints de séparateur (7) emmanchés sur le tube central (4) en séquence de haut en bas, N étant un nombre entier naturel, une section du séparateur (6) étant prévue entre deux joints de séparateur (7) adjacents,
dans lequel chaque section de séparateur (6) comprend :
un manchon de positionnement supérieur (8),
un manchon de positionnement inférieur (9),
une pluralité de coupelles de sédimentation (10) emmanchées sur le tube central (4) en séquence de haut en bas, dans lequel les deux coupelles de sédimentation (10) voisines sont emboîtées l'une dans l'autre et forment un espace entre elles, la coupelle de sédimentation la plus haute (10) sur chaque section de séparateur (6) étant raccordée de manière fixe au tube central (4) par le manchon de positionnement supérieur (8), et la coupelle de sédimentation la plus basse (10) sur chaque section de séparateur (6) étant raccordée de manière fixe au tube central (4) par le manchon de positionnement inférieur (9), et
une pluralité de bols de séparation nervurés (11), chaque coupelle de sédimentation (10) étant prévue avec le bol de séparation nervuré (11) encastré à l'intérieur de cette dernière,
dans lequel la coupelle de sédimentation (10) est en forme de couronne et a un fond polygonal à plusieurs nervures (10-1), dont la nervure (10-1-1) forme un angle de pas (α) de 30 à 60 degrés avec la ligne horizontale, et la partie centrale de la coupelle de sédimentation (10) est un cylindre creux, le bord supérieur de la coupelle de sédimentation (10) étant en forme de zigzag qui correspond à la forme du fond (10-1), la coupelle de sédimentation (10) ayant un support de coupelle (10-2) pour supporter ladite coupelle de sédimentation qui forme un espace annulaire avec le tube central (4), et
dans lequel un groupe de trous d'admission (12) est prévu sur le tube central (4) correspondant à l'espace annulaire, un espace en forme de barre (10-2-1) est ouvert sur le support de coupelle (10-2) de la coupelle de sédimentation (10), le bol de séparation nervuré (11) a la même forme que celle du fond (10-1) de la coupelle de sédimentation (10), le bol de séparation nervuré (11) est prévu avec plusieurs passages de liquide (11-1) et le diamètre externe de la coupelle de sédimentation (10) est inférieur à celui du joint de séparateur (7).

2. Dispositif de séparation en forme de couronne de fond de puits selon la revendication 1, **caractérisé en ce que** le nombre de séparateur (6) est de 60 à 80.

3. Dispositif de séparation en forme de couronne de fond de puits selon la revendication 1 ou 2, **caractérisé en ce que** le nombre de chaque groupe de trous d'admission (12) sur le tube central (4) correspondant à l'espace annulaire est de 3 à 12.

4. Dispositif de séparation en forme de couronne de fond de puits selon la revendication 3, **caractérisé en ce que** l'ouverture du trou d'admission (12) sur le tube central (4) correspondant à l'espace annulaire est de 0,9 mm à 1,2 mm.

5. Dispositif de séparation en forme de couronne de fond de puits selon la revendication 1, 2 ou 4, **caractérisé en ce que** le manchon de positionnement supérieur (8) et le tube central (4) sont raccordés de manière fixe ensemble par des boulons, et le manchon de positionnement inférieur (9) et le tube central (4) sont raccordés de manière fixe par des boulons.
